# EUROPÄISCHE PATENTANMELDUNG

(11) **EP 3 138 688 A1**
(43) Veröffentlichungstag der Anmeldung: **08.03.2017**
(21) Anmeldenummer: 16185773.5
(22) Anmeldetag: 25.08.2016
(51) Int. Cl.: B32B 5/02, B32B 5/18, B32B 5/20, B32B 25/04, B32B 27/30, B32B 1/08, B32B 3/06, B32B 3/26, B32B 3/30

(54) **VERFAHREN ZUM HERSTELLEN EINES FORMTEILS ZUR SCHALLDÄMMUNG EINER EINBAUVORRICHTUNG**

(30) Priorität: 28.08.2015 DE 102015114379
(71) Anmelder: Carcoustics TechConsult GmbH, 51381 Leverkusen (DE)
(72) Erfinder: Cleff, Marcus, 50678 Köln (DE); Heckemueller, Kim, 44265 Dortmund (DE); Ritschel, Nicolas, 40625 Düsseldorf (DE); Winterberg, Dario, 51789 Lindlar (DE)
(74) Vertreter: Patentanwälte Bauer Vorberg Kayser

(57) **Zusammenfassung**

Die Erfindung betrifft ein Verfahren zum Herstellen eines Formteils (1) zur Schalldämmung einer Einbauvorrichtung (2). Das erfindungsgemäße Verfahren ist dadurch gekennzeichnet, dass ein im Wesentlichen ebenes Halbzeug (3) in einem Formprägewerkzeug (4) unter Aufschäumen von Polyurethan gebildet wird, dass das Halbzeug (3) eine Polyurethanschaumschicht (8) sowie eine biegeelastische Schwerschicht (6) aufweist, dass das Halbzeug (3) durch einen Abtrennschritt zu dem Formteil (1) zur Schalldämmung konfektioniert wird und dass die Polyurethanschaumschicht (8) und die Schwerschicht (6) sich im Wesentlichen über die gesamte ebene Ausdehnung des Formteils (1) erstrecken. Die Erfindung betrifft ebenso ein entsprechendes Formteil (1) zur Schalldämmung einer Einbauvorrichtung (2) sowie ein entsprechendes Verfahren zur Schalldämmung einer Einbauvorrichtung (2).

## Beschreibung

Die Erfindung betrifft ein Verfahren zum Herstellen eines Formteils zur Schalldämmung einer Einbauvorrichtung gemäß dem Oberbegriff von Anspruch 1, ein Formteil zur Schalldämmung einer Einbauvorrichtung gemäß dem Oberbegriff von Anspruch 13 sowie ein Verfahren zur Schalldämmung einer Einbauvorrichtung gemäß dem Oberbegriff von Anspruch 14.

Verschiedene motorgetriebene Geräte, welche etwa im Haushalt oder als Teil einer Gebäudeheizung oder Gebäudeklimatisierung verwendet werden, verursachen bei ihrem Betrieb Schall. Ein Beispiel hierfür sind Kompressoren (Verdichter) von Wärmepumpen. Der im Betrieb entstehende Schall - hier insbesondere Körperschall - kann sich dann in dem Gebäude ausbreiten und wird als störend empfunden. Entsprechend sind hier und nachfolgend unter dem Begriff der Einbauvorrichtung jedwede Haushalts- oder Gebäudevorrichtungen zu verstehen, welche an einem bestimmten Ort platziert bzw. eingebaut werden und im bestimmungsgemäßen Betrieb stationär bleiben, auch wenn sie ansonsten grundsätzlich bewegt und transportiert werden können. Sie können insoweit auch als stationäre Einbauvorrichtungen bezeichnet werden. Es zählen einerseits Geräte (oder deren Teile) wie Waschmaschinen, Wäschetrockner, Küchengeräte, Raumklimageräte, Wärmeerzeuger und Heimwerkermaschinen dazu wie auch Geräte (oder deren Teile) der Versorgungstechnik für Gebäude, also insbesondere Geräte der Aufzugstechnik, der Gebäudeautomation, der Raumlufttechnik sowie der Heiztechnik. Speziell umfasst sind auch Wärmepumpen und vor allem Kompressoren für solche Wärmepumpen.

Aus dem Stand der Technik sind zur Schalldämmung bei solchen Kompressoren von Wärmepumpen Schallisolationen bekannt, welche als Stanzteil und im Mehrschichtaufbau hergestellt werden. Dabei sind sowohl die verwendeten Materialien selbst wie auch das Herstellungsverfahren teuer. Hinzu kommt, dass diese bekannten Schallisolationen schon bei der Herstellung auf die spezielle Geometrie der zu dämmenden Wärmepumpe bzw. des Kompressors zugeschnitten werden müssen und dennoch wegen geringer Flexibilität des Materials die Montage am Gerät schwierig ist.

Vor diesem Hintergrund besteht die Aufgabe der Erfindung darin, eine sowohl in der Herstellung günstigere als auch in der Montage weniger schwierige Möglichkeit zur Bereitstellung von Schalldämmung an Einbauvorrichtungen bereitzustellen.

Bezogen auf ein Verfahren zum Herstellen eines Formteils zur Schalldämmung einer Einbauvorrichtung gemäß dem Oberbegriff von Anspruch 1 wird die Aufgabe durch die Merkmale des kennzeichnenden Teils von Anspruch 1 gelöst.

Bezogen auf ein Formteil zur Schalldämmung einer Einbauvorrichtung gemäß dem Oberbegriff von Anspruch 13 wird die Aufgabe durch die Merkmale des kennzeichnenden Teils von Anspruch 13 gelöst.

Bezogen auf ein Verfahren zur Schalldämmung einer Einbauvorrichtung gemäß dem Oberbegriff von Anspruch 14 wird die Aufgabe durch die Merkmale des kennzeichnenden Teils von Anspruch 14 gelöst.

Erfindungsgemäß ist erkannt worden, dass ein Halbzeug für ein Formteil zur Schalldämmung in einem Formprägewerkzeug mit PU(Polyurethan)-Schaum hergestellt werden kann, welches Halbzeug dann auf einfache Art und Weise für die schalldämmende Anwendung bei einer speziellen Einbauvorrichtung konfektionierbar ist. Somit kann ein flexibel anwendbares Halbzeug kostengünstig und in großer Menge hergestellt werden, welches dann mit nur geringem Aufwand für eine große Bandbreite von Anwendungssituationen angepasst und auch montiert werden kann. Hinzu kommt, dass auf diese Weise erhaltene Formteile auch sehr gute akustische Eigenschaften für die Schalldämmung aufweisen, insbesondere in dem hier besonders interessanten Frequenzbereich von etwa 400 Hz bis etwa 800 Hz.

Das vorschlagsgemäße Verfahren zum Herstellen eines Formteils zur Schalldämmung einer Einbauvorrichtung ist dadurch gekennzeichnet, dass ein im Wesentlichen ebenes Halbzeug in einem Formprägewerkzeug unter Aufschäumen von Polyurethan gebildet wird, dass das Halbzeug eine Polyurethanschaumschicht sowie eine biegeelastische Schwerschicht aufweist, dass das Halbzeug durch einen Abtrennschritt zu dem Formteil zur Schalldämmung konfektioniert wird und dass die Polyurethanschaumschicht und die Schwerschicht sich im Wesentlichen über die gesamte ebene Ausdehnung des Formteils erstrecken. Entsprechend weist das Formteil dann ebenso diese Polyurethanschaumschicht und die biegeelastische Schwerschicht auf.

Dabei kann es sich bei der Schwerschicht um eine Schicht aus einem beliebigen Material handeln, welches ein höheres spezifisches Gewicht als die Polyurethanschaumschicht aufweist. Die Polyurethanschaumschicht besteht im Wesentlichen aus geschäumtem Polyurethan, kann daneben aber auch unterschiedliche Zusatzstoffe aufweisen. Dabei weist die Polyurethanschaumschicht vorzugsweise eine Dichte von 70 bis 240 kg/m³, insbesondere eine Dichte von 70 bis 120 kg/m³ und weiter insbesondere eine Dichte von 70 bis 90 kg/m³ auf. Bevorzugt ist, dass die Polyurethanschaumschicht eine Schichtdicke in einem Bereich von 5 mm bis 25 mm, weiter vorzugsweise in einem Bereich von 10 mm bis 20 mm, aufweist.

Die weiche Polyurethanschaumschicht entkoppelt die Schwerschicht von den umgebenden Bauteilen und vermindert auf diese Weise die Übertragung von Körperschall. Es können neben weiteren Arten von Schichten auch mehr als jeweils eine Polyurethanschaum- und eine Schwerschicht vorgesehen sein. Es können auch einzelne Objekte oder kornartige Substanzen in der Polyurethanschaumschicht oder der Schwerschicht vorgesehen sein. Der Abtrennschritt sieht eine Abtrennung eines Teils des Halbzeugs vor, welche Abtrennung somit eine Schnittkante sowohl der Schwer- als auch der Polyurethanschaumschicht verursacht. Die Schwerschicht und die Polyurethanschaumschicht decken dabei das Formteil - nicht jedoch notwendigerweise bereits das Halbzeug - im Wesentlichen vollständig ab. Auf diese Weise wird eine wirksame Schalldämmung ohne akustisch ungünstige "Lücken" in der Dämmung erreicht. Da das Formteil also durch diesen Abtrennschritt aus dem Halbzeug hervorgeht, sind regelmäßig an dem Halbzeug vorhandene Merkmale auch an dem Formteil vorhanden und umgekehrt, was nachfolgend nicht für jedes einzelne Merkmal ausdrücklich festgestellt wird.

Gemäß einer bevorzugten Ausführungsform ist vorgesehen, dass das Formteil auf einer Außenoberfläche eine Verbindungsanordnung zum Herstellen einer Verbindung zwischen mindestens zwei Bereichen der Außenoberfläche aufweist. Hier bezeichnet der Begriff der Außenoberfläche eine beliebige der beiden Hauptflächen des Formteils - im Gegensatz zu den Randflächen -, welche durch die im Wesentlichen ebene Form des Halbzeugs definiert sind. Damit kann also im Zuge der Fertigung des Halbzeugs eine Verbindungsvorrichtung mit hergestellt werden, welche dann bei der Montage des Formteils an der zu isolierenden Einbauvorrichtung eingesetzt wird. Die Außenoberflächen des Formteils sind gleichzeitig auch die Außenoberflächen des Halbzeugs.

Vorzugsweise bedeckt diese Verbindungsanordnung die Außenoberfläche des Formteils und/oder des Halbzeugs im Wesentlichen vollständig, wodurch sie also unabhängig von dem Abtrennschritt zur Konfektion stets für das Formteil zur Verfügung steht. Insoweit weist dann auch das Halbzeug eine solche Verbindungsanordnung auf einer Außenoberfläche auf.

Hier ist weiter bevorzugt, dass die Verbindungsanordnung eine Faseranordnung zum Herstellen eines Klettverschlusses aufweist, bei welcher Faseranordnung es sich insbesondere um eine Schlaufenfaseranordnung handeln kann. Alternativ kann es sich auch um eine Hakenfaseranordnung - also den Widerpart für den Klettverschluss - handeln. Die Verbindungsanordnung kann auch aus einer solchen Faseranordnung bestehen.

Speziell wenn es sich bei dieser Verbindungsanordnung um eine Faseranordnung zum Herstellen eines Klettverschlusses handelt, kann auch vorgesehen sein, dass das Halbzeug auf der Außenoberfläche auch bereits eine Gegenfaseranordnung zum Herstellen des Klettverschlusses aufweist. Wenn die Faseranordnung eine Schlaufenfaseranordnung umfasst, umfasst die Gegenfaseranordnung eine Hakenfaseranordnung und umgekehrt. Diese Gegenfaseranordnung kann auch in dem Halbzeug eingeschäumt sein.

In einer weiteren bevorzugten Ausführungsform ist vorgesehen, dass das Formteil eingeschäumte Fixierelemente zum Herstellen einer Befestigung mit dem Formteil aufweist. Mit solchen Fixierelementen kann das Formteil zum Beispiel auch an Mauerwerk oder weiteren Vorrichtungen befestigt werden, welche die schallzudämmende Einbauvorrichtung umgeben. Umgekehrt können Vorrichtungen mithilfe solcher Fixierelemente auch an dem montierten Formteil befestigt werden. Vorzugsweise werden die Fixierelemente vor dem Aufschäumen des Polyurethans in das Formprägewerkzeug eingelegt. Die Fixierelemente sind insoweit von der Polyurethanschaumschicht und/oder der Schwerschicht umgeben und stehen - soweit durch ihre Form möglich - mit dieser in formschlüssigem Eingriff. Es kann sich insbesondere um Knöpfe, Haken, Schienen, Schrauben o. dgl. handeln. Vorzugsweise ragen die Fixierelemente aus der Außenoberfläche des Formteils. Dies kann sinngemäß gleich auch für die obige Gegenfaseranordnung gelten.

Als weitere Maßnahme im Rahmen der Herstellung des Halbzeugs zur Erleichterung der Montage des Formteils ist vorzugsweise vorgesehen, dass das Formteil im Wesentlichen parallel zueinander verlaufende Oberflächenrillen zur Erhöhung einer Biegsamkeit des Formteils aufweist. Solche Oberflächenrillen bilden sowohl eine Materialschwächung zum Biegen als auch Lücken zur Berücksichtigung des kleineren Innenradius des gebogenen Formteils. Unter diesen Begriff können beliebige, im Wesentlichen gerade verlaufende Ausnehmungen verstanden werden, insbesondere solche mit einem im Wesentlichen dreieckigen, im Wesentlichen rechteckigen oder im Wesentlichen trapezförmigen Querschnitt. Entsprechend ist es bevorzugt, dass die Oberflächenrillen auf einer Innenoberfläche angeordnet sind. Unter dieser Innenoberfläche ist - analog zu der obigen Außenoberfläche - eine beliebige der beiden Hauptflächen des Formteils zu verstehen, welche durch die im Wesentlichen ebene Form des Halbzeugs definiert sind. Vorzugsweise ist diese Innenoberfläche der obigen Außenoberfläche abgewandt. Für die Herstellung ist es bevorzugt, dass die Oberflächenrillen durch Konturen oder Einlegeelemente in dem Formprägewerkzeug gebildet werden.

Eine ähnliche und ebenfalls bevorzugte Maßnahme, diesmal zur genaueren Durchführung des Abtrennschrittes, sieht vor, dass das Halbzeug im Wesentlichen parallel zueinander verlaufende Schnittmarkierungsstrukturen aufweist. Dabei können die unterschiedlichen Schnittmarkierungsstrukturen zum Beispiel für unterschiedliche Längen der zu dämmenden Einbauvorrichtung vorgesehen sein. Bei solchen Schnittmarkierungsstrukturen kann es sich etwa - analog zu den obigen Oberflächenrillen - ebenfalls um Rillen bzw. Vertiefungen oder auch um Vorsprünge bzw. Erhebungen handeln. Die Schnittmarkierungsstrukturen verlaufen vorzugsweise im Wesentlichen senkrecht zu den Oberflächenrillen. Entsprechend kann der Abtrennschritt ein Abtrennen entsprechend einer Schnittmarkierungsstruktur umfasst. Wenn das Abtrennen dann nicht entlang der "ersten" Schnittmarkierungsstruktur erfolgt, wird auch das Formteil dann Schnittmarkierungsstrukturen auf der Außen- und/oder der Innenoberfläche aufweisen.

Um einen ggf. vorstehenden und umlaufenden Deckel der zu dämmenden Einbauvorrichtung - wobei insbesondere Kompressoren von Wärmepumpen einen solchen Deckel aufweisen - aufnehmen zu können, ist bevorzugt vorgesehen, dass das Formteil eine Nut zur Aufnahme eines Deckelrands aufweist. Durch den Eingriff dieser Nut mit dem Deckelrand ist auch eine gute Möglichkeit zum Befestigen des Formteils an der Einbauvorrichtung gegeben. Hier ist es bevorzugt, dass die Nut im Wesentlichen parallel zu den Schnittmarkierungsstrukturen verläuft und insbesondere weiter bevorzugt, dass die Nut im Wesentlichen senkrecht zu den Oberflächenrillen verläuft. Vorzugsweise ist die Nut auf der Innenoberfläche des Formteils angeordnet.

Als weitere bevorzugte Ausführungsform ist vorgesehen, dass das Formteil musterartig auf einer Innenoberfläche angeordnete Höhenstrukturen, bei welchen es sich insbesondere um Erhebungen handeln kann, zur Schalldämmung aufweist.

Da ihnen jeweils unterschiedliche Funktionen zukommen kann es vorteilhaft sein, dass diese Höhenstrukturen, die obige Nut und die Schnittmarkierungsstrukturen in unterschiedlichen Bereichen, welche in etwa einem mittleren Rumpfbereich, einem oberen Deckelbereich und einem Bodenbereich entsprechen angeordnet sind. Entsprechend sieht ein bevorzugtes Ausführungsbeispiel vor, dass die Höhenstrukturen in einem Bereich des Formteils angeordnet sind, zwischen den Schnittmarkierungsstrukturen und der Nut sowie beabstandet zu den Schnittmarkierungsstrukturen und der Nut liegt.

Eine besonders wirksame Schalldämmung kann erreicht werden, wenn gemäß einer bevorzugten Ausführungsform das Halbzeug eine weitere Polyurethanschaumschicht aufweist und die Schwerschicht zum Bilden einer schallisolierenden schwingenden Masse zwischen der Polyurethanschaumschicht und der weiteren Polyurethanschaumschicht angeordnet ist. Das Formteil weist dann ebenfalls eine solche weitere Polyurethanschaumschicht auf. Auf diese Weise wird ein Feder-Masse-System verwirklicht, welches vor allem den hier besonders relevanten tieffrequenten Schall dämmen kann. Auch für die weitere Polyurethanschaumschicht liegt bevorzugt die Schichtdicke in einem Bereich von 5 mm bis 25 mm, weiter vorzugsweise in einem Bereich von 10 mm bis 20 mm.

Bezogen auf den Abtrennschritt ist bevorzugt vorgesehen, dass er ein Stanzen oder ein Wasserstrahlschneiden zum Konfektionieren umfasst. Grundsätzlich kann aber auch eine andere Abtrennmethode eingesetzt werden.

Das erfindungsgemäße Verfahren bietet verschiedene Ansätze, das hergestellte Formteil auf die speziellen akustischen Anforderungen einzustellen. Hier sieht eine bevorzugte Ausführungsform vor, dass ein vorbestimmter akustischer Parameter der Polyurethanschaumschicht, vorzugsweise des Formteils, durch Anpassung eines spezifischen Gewichts der Polyurethanschaumschicht eingestellt wird. Alternativ oder zusätzlich zu einer solchen Anpassung des spezifischen Gewichts kann jeweils eine Anpassung einer Zusammensetzung, einer Porencharakteristik oder einer Schichtdicke der Polyurethanschaumschicht vorgesehen sein.

Einen ähnlichen Ansatz verfolgen bevorzugte Ausführungsformen, bei denen ein vorbestimmter akustischer Parameter der Schwerschicht, vorzugsweise des Formteils, durch Anpassung eines spezifischen Gewichts der Schwerschicht eingestellt wird. Auch hier kann alternativ oder zusätzlich zu der Anpassung des spezifischen Gewichts jeweils eine Anpassung einer Zusammensetzung der Schwerschicht oder einer Schichtdicke der Schwerschicht vorgesehen sein.

Es ist bevorzugt, dass die Schwerschicht Ethylenvinylacetat (EVA), Ethylen-Propylen-Kautschuk (EPM), Ethylen-Propylen-Dien-Kautschuk (EPDM) und/oder Polyvinylchlorid (PVC) umfasst. Es kann ebenso sein, dass die Schwerschicht im Wesentlichen aus einer Vielzahl der genannten Materialien oder nur aus einem der genannten Materialien besteht.

Das erfindungsgemäße Formteil zur Schalldämmung einer Einbauvorrichtung ist dadurch gekennzeichnet, dass das Formteil nach einem erfindungsgemäßen Verfahren zum Herstellen eines Formteils zur Schalldämmung hergestellt wurde. Bevorzugte Ausführungsformen des erfindungsgemäßen Formteils ergeben sich aus den bevorzugten Ausführungsformen des erfindungsgemäßen Verfahrens zum Herstellen eines Formteils zur Schalldämmung und umgekehrt.

Das erfindungsgemäße Verfahren zur Schalldämmung einer Einbauvorrichtung ist dadurch gekennzeichnet, dass ein im Wesentlichen ebenes Halbzeug mit einer Polyurethanschaumschicht und einer biegeelastischen Schwerschicht durch einen Abtrennschritt zu einem Formteil zur Schalldämmung konfektioniert wird, dass das Formteil unter Verbiegung so angeordnet und befestigt wird, dass das Formteil eine Mantelfläche der Einbauvorrichtung umgreift und die Polyurethanschaumschicht bezogen auf die Schwerschicht innen zur Mantelfläche angeordnet ist. Bevorzugt ist, dass das Formteil gemäß dem erfindungsgemäßen Verfahren zum Herstellen eines Formteils hergestellt wurde.

Diese Mantelfläche ist eine grundsätzlich beliebige Umfangsfläche der Einbauvorrichtung. Bevorzugt ist die Einbauvorrichtung im Wesentlichen zylinderförmig, sodass dann die Mantelfläche einem Mantel der Zylinderform entspricht. Da es sich - wie bereits festgestellt - bei der Einbauvorrichtung auch um eine einzelne Komponente eines Einbaugeräts handeln kann, ist das Merkmal der wesentlichen Zylinderförmigkeit auch auf eine solche Komponente zu beziehen. Entsprechend ist es bevorzugt, dass das Formteil um eine Längsachse der im Wesentlichen zylinderförmigen Einbauvorrichtung gebogen wird. Diese Längsachse entspricht dabei einer Höhenrichtung der Zylinderform.

Unter dem Umgreifen der Mantelfläche ist zu verstehen, dass das Formteil sich - zumindest an einem Längsabschnitt der Einbauvorrichtung - um den im Wesentlichen vollständigen Umfang der besagten Mantelfläche erstreckt. Dabei kann aber eine geringfügige Lücke zwischen den die Mantelfläche umgreifenden Teilen des Formteils verbleiben, sodass das Formteil bei dem Umgreifen der Mantelfläche jedenfalls nicht auf ganzer Linie überlappt.

Diesem Sachverhalt entspricht eine bevorzugte Ausführungsform des erfindungsgemäßen Verfahrens, die vorsieht, dass das Formteil eine Außenoberfläche, eine Innenoberfläche und eine umlaufende Randfläche aufweist. Gemäß einer ersten bevorzugten Variante ist vorgesehen dass bei der die Mantelfläche umgreifenden Anordnung des Formteils entlang einer Naht die Randfläche Stoß-an-Stoß aneinander angrenzt und dass nach Anordnung das Formteil dadurch an der Einbauvorrichtung befestigt wird, dass eine Verschlussvorrichtung über die Naht angeordnet wird und an der Außenoberfläche befestigt wird. Die Naht wird hier also durch diejenigen Abschnitte der Randfläche des Formteils definiert, welche bei dem Umgreifen der Mantelfläche aneinander angrenzen, und zwar speziell Stoß-an-Stoß aneinander angrenzen. Mit anderen Worten weisen die angrenzenden Randflächen im Wesentlichen aufeinander. Eine zweite bevorzugte Variante sieht hingegen vor, dass bei der die Mantelfläche umgreifenden Anordnung des Formteils die Innenoberfläche teilweise die Außenoberfläche überlappt. Dann kann nach Anordnung das Formteil dadurch an der Einbauvorrichtung befestigt werden, dass eine Verschlussvorrichtung über einem Überlappungsrand angeordnet und an der Außenoberfläche befestigt wird. Der Überlappungsrand ist entsprechend derjenige Teil der Randfläche, welcher selbst die Außenoberfläche überlappt.

Bei der Anordnung der Verschlussvorrichtung über die Naht kann es sein, dass die Verschlussvorrichtung bereits vorher mit dem Formteil bzw. mit dessen Außenoberfläche auf einer Seite der Naht insbesondere fest verbunden ist und entsprechend bei der Montage nur noch auf der jeweils anderen Seite der Naht an der Außenoberfläche befestigt wird. Wenn etwa die Außenoberfläche eine insbesondere flächendeckende Schlaufenfaseranordnung zum Herstellen eines Klettverschlusses aufweist, dann können mit der Außenoberfläche fest verbundene Streifen mit einer Hakenfaseranordnung als Verschlussvorrichtung vorgesehen sein, welche dann auf der anderen Seite der Naht einen Klettverschluss mit der Schlaufenfaseranordnung herstellen. Insoweit kann also die Verschlussvorrichtung kann auch die obige Gegenfaseranordnung umfassen bzw. aus dieser bestehen.

Bevorzugte Ausführungsformen des erfindungsgemäßen Verfahrens zur Schalldämmung einer Einbauvorrichtung ergeben sich aus den jeweiligen bevorzugten Ausgestaltungen des erfindungsgemäßen Verfahrens zum Herstellen eines Formteils zur Schalldämmung einer Einbauvorrichtung sowie des erfindungsgemäßen Formteils und umgekehrt.

Weitere Merkmale und Vorteile der Erfindung ergeben sich aus der folgenden Beschreibung von nicht einschränkend zu verstehenden Ausführungsbeispielen, welche im Folgenden unter Bezugnahme auf die Figuren näher erläutert werden. In dieser Zeichnung zeigen schematisch:
- Fig. 1:: ein Formprägewerkzeug zum Herstellen eines Halbzeugs im Rahmen der Durchführung einer Ausführungsform des Verfahrens zum Herstellen eines Formteils;
- Fig. 2:: a) ein im Rahmen einer Ausführungsform des erfindungsgemäßen Verfahrens hergestelltes Halbzeug in einer Ansicht der Außenoberfläche,
b) das Halbzeug der Fig. 2a in einer Ansicht der Innenoberfläche,
b) ein durch einen Abtrennschritt aus dem Halbzeug der Fig. 2a und 2b konfektioniertes Formteil gemäß einer ersten Ausführungsform in einer Ansicht der Innenoberfläche,
- Fig. 3: einen Perspektivansicht im Teilschnitt eines Kompressor einer Wärmepumpe und eines um zur Schalldämmung des Kompressors montierten Formteils gemäß einer zweiten Ausführungsform und
- Fig. 4: eine perspektivische Schnittansicht des Formteils der Fig. 3.

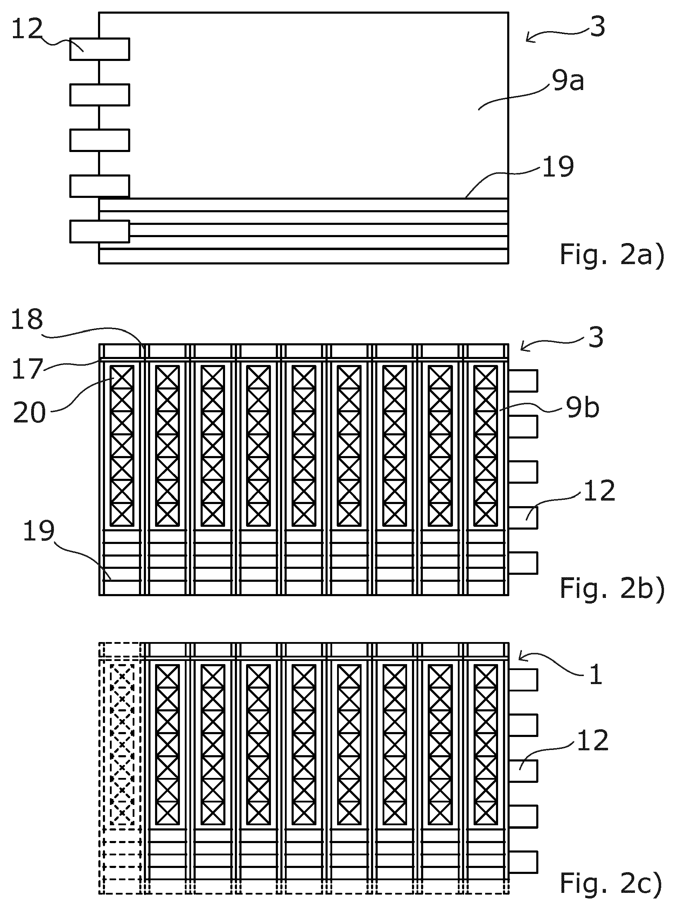

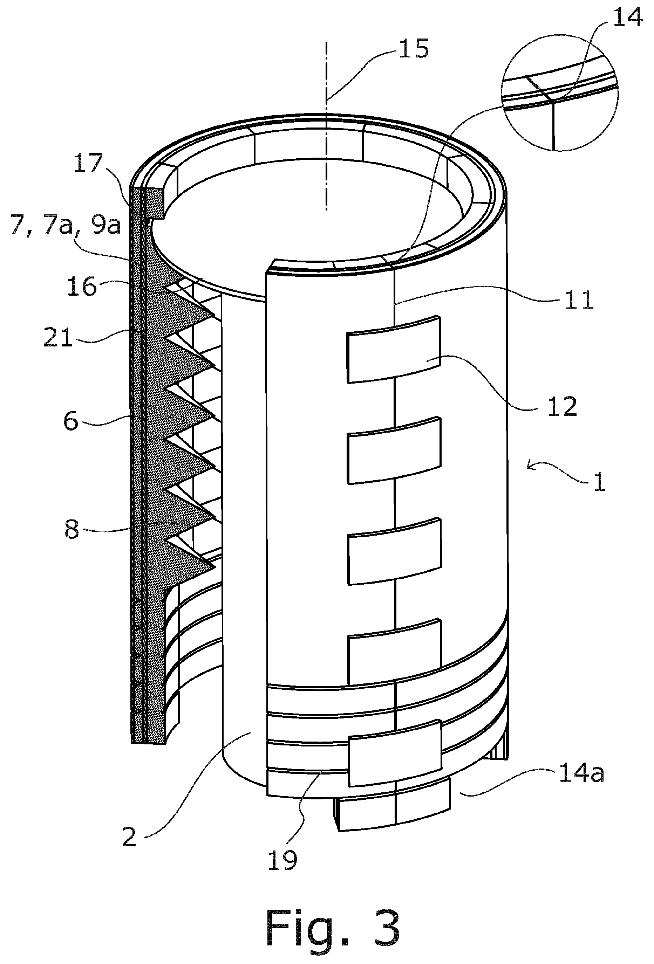

In den Fig. 2c, 3 und 4 ist jeweils ein Formteil 1 dargestellt, welches zur Schalldämmung einer Einbauvorrichtung 2 dient, und zwar speziell eines Kompressors einer Wärmepumpe. Diese ist in der Fig. 3 dargestellt. Auf die diesbezüglichen Einzelheiten des Innenlebens des Kompressors kommt es hier nicht weiter an.

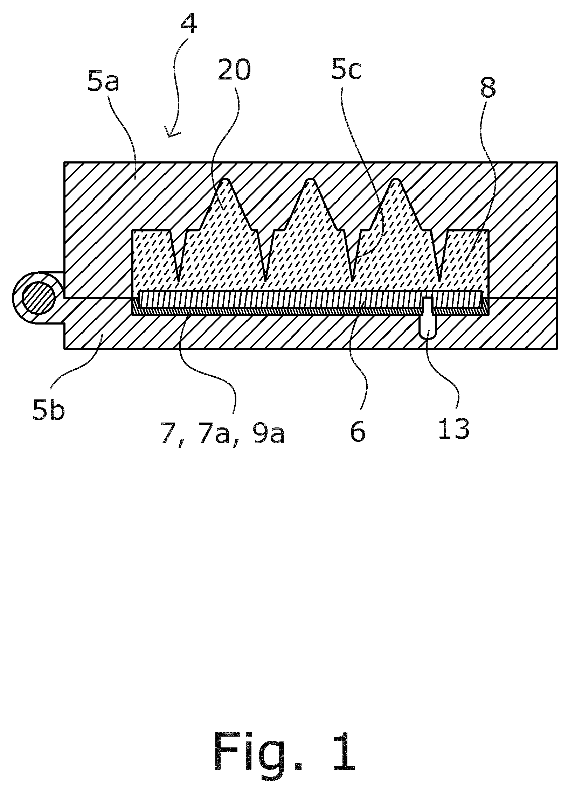

Ein solches Formteil 1 wird dadurch hergestellt, dass das in den Fig. 2a und 2b dargestellte Halbzeug 3 hier speziell durch einen Wasserschneidevorgang so geschnitten und damit konfektioniert wird, dass das entsprechend fertig konfektionierte Formteil 1 gemäß einer ersten Ausführungsform der Fig. 2c entsteht. Das Halbzeug 3 wiederum wird in dem in der Fig. 1 dargestellten Formprägewerkzeug 4 gebildet. Speziell wird hierzu in die beiden Formhälften 5a, b zunächst u.a. eine Schwerschicht 6 aus Ethylenvinylacetat (EVA) eingebracht, welche - wie in der Fig. 1 dargestellt - an der unteren Formhälfte 5b eingebracht ist. Zwischen dieser Schwerschicht 6 und der unteren Formhälfte 5b ist ferner - ebenfalls in der Art einer Schicht - eine Schlaufenfaseranordnung 7a angeordnet. Anschließend wird zum Bilden einer Polyurethanschaumschicht 8 in an sich bekannter Weise ein Reaktionsgemisch mit einer Isocyanatkomponente und einer Polyolkomponente das Formprägewerkzeug 4 eingebracht, sodass durch die resultierenden Vernetzungsreaktion Polyurethan aufgeschäumt wird. Aus der Form - speziell aus einer in die Bildebene der Fig. 1 verlaufenden Längserstreckung - des Formprägewerkzeugs 4 ergibt sich, dass das in ihm gebildete Halbzeug 3 eine im Wesentlichen ebene Form aufweist. Diese ebene Form ist auch an dem Halbzeug 3 der Fig. 2a und 2b erkennbar.

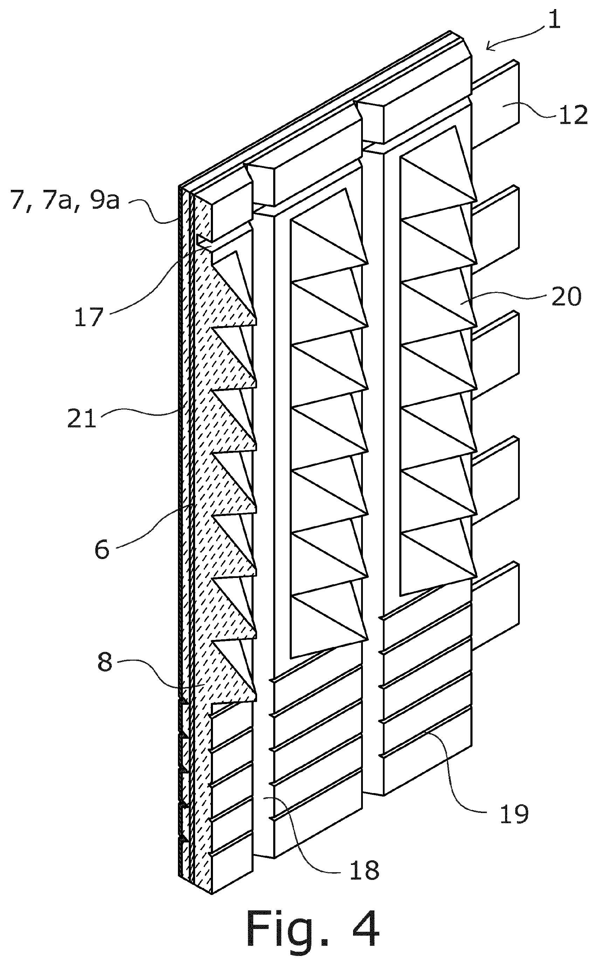

Zu erkennen ist weiter an dem in den Fig. 3 und 4 gezeigten und in der Fig. 3 gebogenen Formteil 1 gemäß einer zweiten Ausführungsform, dass sich sowohl die Polyurethanschaumschicht 8 als auch jeweils die Schwerschicht 6 und die Schlaufenfaseranordnung 7a vollständig über die vormalige Ebene des Halbzeugs 3 erstrecken, was auch für das Formteil 1 der Fig. 2c gemäß der ersten Ausführungsform gilt.

Die der unteren Formhälfte 5b entsprechende Oberfläche des Halbzeugs 3 wird hier als Außenoberfläche 9a und die gegenüberliegende, der oberen Formhälfte 5a entsprechende Oberfläche als Innenoberfläche 9b bezeichnet. Speziell bietet die Fig. 2a eine Sicht auf die Außenoberfläche 9a des Halbzeugs 3 und die Fig. 2b eine Sicht auf die Innenoberfläche 9b des Halbzeugs 3. Dabei weist ein aus einem solchen Halbzeug 3 entstandenes Formteil 1 ebenfalls jeweils eine Außenoberfläche 9a und eine Innenoberfläche 9b, welche einfach der entsprechenden Oberfläche des Halbzeugs 3 entspricht.

In der Fig. 3 ist zu erkennen, dass die obige Schlaufenfaseranordnung 7a eine Verbindungsanordnung 7 bildet, mit der jeweils zwei Bereiche der Außenoberfläche 9a verbunden werden, welche gegenüber einer durch das Formteil 1 nach Umgreifen der einer Einbauvorrichtung 2 gebildeten Naht 11 liegen.

Und zwar wird eine Verbindung zwischen diesen beiden Bereichen und hier speziell ein Klettverschluss hergestellt, indem zunächst eine jeweils durch Streifen mit einer Hakenfaseranordnung gebildete Verschlussvorrichtung 12 vorgesehen ist, die fest mit der Außenoberfläche 9a auf einer Seite der Naht 11 verbunden ist. Die Hakenfaseranordnung der Verschlussvorrichtung 12 bildet insoweit die Gegenfaseranordnung zu der Schlaufenfaseranordnung 7. Diese Verschlussvorrichtung 12 kann durch Einlegen in das Formprägewerkzeug 4 als Bestandteil des Halbzeugs 3 hergestellt werden. Ein entsprechendes Einlegeelement 13 - welches auch ein Fixierelement o. dgl. sein kann - ist schematisch in der Fig. 1 dargestellt.

Nach umgreifender Anordnung des Formteils 1 um die Mantelfläche der Einbauvorrichtung 2 werden die jeweiligen Enden der Streifen, welche den fest mit der Außenoberfläche 9a verbundenen Enden der Streifen bezogen auf die Naht 11 gegenüberliegen, unter Bildung eines Klettverschlusses mit der Schlaufenfaseranordnung 7a auf der entsprechenden Seite der Naht 11 in Eingriff gebracht. Wie aus der Fig. 3 hervorgeht, liegt dabei die Randfläche 14 des Formteils 1 entlang dieser Naht 11 Stoß-an-Stoß.

Dabei wurde das Formteil 1 entsprechend der Darstellung der Fig. 3 angeordnet, indem es um eine Längsachse 15 des Kompressors bzw. seiner im Wesentlichen zylinderartigen Form gebogen und mittels der Verschlussvorrichtung 12 sowie der Verbindungsanordnung 7 bzw. der Schlaufenfaseranordnung 7a befestigt wurde.

Diese Befestigung des Formteils 1 umfasste auch die Aufnahme eines Deckelrands 16 - welcher in der Fig. 3 angedeutet ist - in einer entsprechenden und auf der Innenoberfläche 9b angeordneten Nut 17 zur Aufnahme des Deckelrands 16, welche Nut 17 auch in der Fig. 2b zu erkennen ist.

Zur Befestigung von z. B. Messgeräten an dem Kompressor bzw. Formteil 1 kann das Formteil 1 auch - hier nicht speziell gezeigte - Fixierelemente aufweisen, die dann bevorzugt aus der Außenoberfläche 9a ragen. Sie können durch das Vorsehen eines Einlegeelements 13 im Formprägewerkzeug 4 vor dem Aufschäumen des Polyurethan - wie oben beschrieben - im Herstellungsprozess berücksichtigt werden.

Auch die im Folgenden beschriebenen Strukturmerkmale des Halbzeugs 3 bzw. des Formteils 1 können durch das Einlegen entsprechender Form- oder Einlegeelemente 13 in das Formprägewerkzeug 4 oder das Vorsehen einer entsprechenden Konturierung in den Formhälften 5a, b selbst erzielt werden.

Die in den Fig. 2b und 4 erkennbaren und parallel zueinander verlaufenden Oberflächenrillen 18, welche auf der Innenoberfläche 9b angeordnet sind, erhöhen die Biegsamkeit des Formteils 1 einerseits durch Materialschwächung und andererseits dadurch, dass der den Oberflächenrillen 18 entsprechende Freiraum durch die Biegung des Formteils 1 zumindest teilweise ausgefüllt wird. In der Fig. 1 sind Konturvorsprünge 5c in der oberen Formhälfte 5a zu erkennen, durch welche diese Oberflächenrillen 18 hergestellt werden können.

Hingegen sowohl auf der Außenoberfläche 9a als auch auf der Innenoberfläche 9b angeordnet sind ebenfalls im Wesentlichen parallel zueinander verlaufende Schnittmarkierungsstrukturen 19 vorgesehen. Wie aus einem Vergleich zwischen der Fig. 2a und der Fig. 2c hervorgeht, sah der Abtrennschritt zum Konfektionieren des Formteils 1 ein Schneiden - hier speziell mit einer Wasserschneidevorrichtung - entlang einer solchen Schnittmarkierungsstruktur 19 vor. Und zwar wurde diejenige Schnittmarkierungsstruktur 19 hierfür ausgewählt, welche der Länge der zu dämmenden Einbauvorrichtung 2 entspricht. Ebenso fand ein Schneiden in Längsrichtung entlang einer Oberflächenrille 18 statt. Dieses Schneiden in dem Abtrennschritt kann auch entlang eines nicht-geraden Profils verlaufen, sodass die Randfläche 14 des Formteil 1 konturartig verläuft, also insbesondere Randflächenvorsprünge 14a aufweist. Dies ist für das Formteil 1 der Fig. 3 gezeigt. Damit können entsprechende Formen der Einbauvorrichtung 2 berücksichtigt werden.

Ebenso kann die oben genannte Nut 17, welche erkennbar parallel zu den Schnittmarkierungsstrukturen 19 aber senkrecht zu den Oberflächenrillen 18 verläuft, durch ein solches Einlegeelement 13 oder eine Konturierung der Formhälften 5a, b erzeugt werden.

Schließlich zeigen die Fig. 3a, 3b und 4 musterartig auf der Innenoberfläche 9b angeordnete und pyramidenförmige Höhenstrukturen 20, welche durch ihre Formgebung eine besonders wirksame Schalldämmung bewirken. Daneben und gleichzeitig wirken diese Höhenstrukturen 20 in der Art von Federn zum Toleranzausgleich, wenn das Formteil 1 die Mantelfläche der Einbauvorrichtung 2 umgreift. Die Fig. 1 zeigt Ausnehmungen in der oberen Formhälfte 5a zum Erzeugen solcher Höhenstrukturen 20.

Aus den Fig. 2a, b, c, 3 und 4 geht hervor, dass jeweils die Höhenstrukturen 20, die Schnittmarkierungsstrukturen 19 und die Nut 17 jeweils in einem eigenen Bereich angeordnet sind und diese Bereiche jeweils separat und beabstandet zueinander angeordnet sind.

Das Formteil 1 gemäß der zweiten Ausführungsform der Fig. 3 und 4 weist neben der Polyurethanschaumschicht 8 eine weitere Polyurethanschaumschicht 21 auf, wobei die Schwerschicht 6 zwischen diesen beiden Schichten liegt. Bei einer entsprechenden Anordnung eines Formteils 1 mit nur einer Polyurethanschaumschicht 8 ist diese vorzugsweise - bezogen auf die Mantelfläche der Einbauvorrichtung 2 - weiter innen liegend als die Schwerschicht 6. In dem Formteil 1 gemäß dieser zweiten Ausführungsform bildet die Schwerschicht 6 eine schwingende Masse in einem Feder-Masse-System, wodurch vor allem tieffrequenter Schall besonders wirksam gedämmt wird. Es sind auch Varianten mit zusätzlichen Schichten denkbar.

Bei den in den Fig. 1, 2a-c, 3 und 4 gezeigten Formteilen 1 wurde ein vorbestimmter akustischer Parameter, und zwar speziell die Schalldämmung in dem Frequenzbereich unter 800 Hz, noch genauer zwischen 400 Hz und 800 Hz eingestellt, indem das spezifische Gewicht, die Zusammensetzung und die Porengröße der Polyurethanschaumschicht angepasst wurde. Dies geschah durch das Vorsehen geeigneter Additive in dem Polyurethanschaum. Ferner wurde zu diesem Zweck auch die Schichtdicke der Polyurethanschaumschicht 8 eingestellt, was etwa durch die Wahl eines Formprägewerkzeugs 4 mit den passenden Dimensionen erfolgen kann. Als akustischer Parameter in diesem Sinne kann - wie hier der Fall ist - auch ein Dämpfungsverlauf über einen ganzen Frequenzbereich verstanden werden.

Ebenso wurde dieser akustische Parameter vorliegend durch Anpassung des spezifischen Gewichts, der Zusammensetzung und der Schichtdicke der Schwerschicht 6 eingestellt.

## Patentansprüche

1. Verfahren zum Herstellen eines Formteils (1) zur Schalldämmung einer Einbauvorrichtung (2), **dadurch gekennzeichnet, dass** ein im Wesentlichen ebenes Halbzeug (3) in einem Formprägewerkzeug (4) unter Aufschäumen von Polyurethan gebildet wird, dass das Halbzeug (3) eine Polyurethanschaumschicht (8) sowie eine biegeelastische Schwerschicht (6) aufweist, dass das Halbzeug (3) durch einen Abtrennschritt zu dem Formteil (1) zur Schalldämmung konfektioniert wird und dass die Polyurethanschaumschicht (8) und die Schwerschicht (6) sich im Wesentlichen über die gesamte ebene Ausdehnung des Formteils (1) erstrecken.

2. Verfahren nach Anspruch 1, **dadurch gekennzeichnet, dass** das Formteil (1) auf einer Außenoberfläche (9a) eine Verbindungsanordnung (7) zum Herstellen einer Verbindung zwischen mindestens zwei Bereichen der Außenoberfläche (9a) aufweist, vorzugsweise, dass die Verbindungsanordnung die Außenoberfläche (9a) im Wesentlichen vollständig bedeckt.

3. Verfahren nach Anspruch 1, **dadurch gekennzeichnet, dass** die Verbindungsanordnung (7) eine Faseranordnung zum Herstellen eines Klettverschlusses aufweist, insbesondere eine Schlaufenfaseranordnung (7a) aufweist, vorzugsweise aus der Faseranordnung besteht.

4. Verfahren nach einem der Ansprüche 1 bis 3, **dadurch gekennzeichnet, dass** das Formteil (1) eingeschäumte Fixierelemente zum Herstellen einer Befestigung mit dem Formteil (1) aufweist, vorzugsweise, dass die Fixierelemente aus der Außenoberfläche (9a) ragen, insbesondere, dass die Fixierelemente vor dem Aufschäumen des Polyurethans in das Formprägewerkzeug (4) eingelegt werden.

5. Verfahren nach einem der Ansprüche 1 bis 4, **dadurch gekennzeichnet, dass** das Formteil (1) im Wesentlichen parallel zueinander verlaufende Oberflächenrillen (18) zur Erhöhung einer Biegsamkeit des Formteils (1) aufweist, vorzugsweise, dass die Oberflächenrillen (18) durch Konturen und/oder Einlegeelemente (13) in dem Formprägewerkzeug (4) gebildet werden.

6. Verfahren nach einem der Ansprüche 1 bis 3, **dadurch gekennzeichnet, dass** das Halbzeug (3) im Wesentlichen parallel zueinander, vorzugsweise im Wesentlichen senkrecht zu den Oberflächenrillen (18), verlaufende Schnittmarkierungsstrukturen (19) aufweist, insbesondere, dass der Abtrennschritt ein Abtrennen entsprechend einer Schnittmarkierungsstruktur (19) umfasst.

7. Verfahren nach einem der Ansprüche 1 bis 6, **dadurch gekennzeichnet, dass** das Formteil (1) eine Nut (17) zur Aufnahme eines Deckelrands (16) aufweist, vorzugsweise, dass die Nut (17) im Wesentlichen parallel zu den Schnittmarkierungsstrukturen (19) verläuft, insbesondere, dass die Nut (17) im Wesentlichen senkrecht zu den Oberflächenrillen (18) verläuft.

8. Verfahren nach einem der Ansprüche 1 bis 7, **dadurch gekennzeichnet, dass** das Formteil (1) musterartig auf einer Innenoberfläche (9b) angeordnete Höhenstrukturen (20), insbesondere Erhebungen, zur Schalldämmung aufweist, vorzugsweise, dass die Höhenstrukturen (20) in einem Bereich des Formteils (1) angeordnet sind, welcher zwischen den Schnittmarkierungsstrukturen (19) und der Nut (17) sowie beabstandet zu den Schnittmarkierungsstrukturen (19) und der Nut (17) liegt.

9. Verfahren nach einem der Ansprüche 1 bis 8, **dadurch gekennzeichnet, dass** das Halbzeug (3) eine weitere Polyurethanschaumschicht (21) aufweist und die Schwerschicht (6) zum Bilden einer schallisolierenden schwingenden Masse zwischen der Polyurethanschaumschicht (8) und der weiteren Polyurethanschaumschicht (21) angeordnet ist.

10. Verfahren nach einem der Ansprüche 1 bis 9, **dadurch gekennzeichnet, dass** ein vorbestimmter akustischer Parameter der Polyurethanschaumschicht (8), vorzugsweise des Formteils (1), durch Anpassung eines spezifischen Gewichts und/oder einer Zusammensetzung und/oder einer Porencharakteristik und/oder einer Schichtdicke der Polyurethanschaumschicht (8) eingestellt wird.

11. Verfahren nach einem der Ansprüche 1 bis 10, **dadurch gekennzeichnet, dass** ein vorbestimmter akustischer Parameter der Schwerschicht (6), vorzugsweise des Formteils (1), durch Anpassung eines spezifischen Gewichts und/oder einer Zusammensetzung und/oder einer Schichtdicke der Schwerschicht (6) eingestellt wird.

12. Verfahren nach einem der Ansprüche 1 bis 11, **dadurch gekennzeichnet, dass** die Schwerschicht (6) Ethylenvinylacetat (EVA), Ethylen-Propylen-Kautschuk (EPM), Ethylen-Propylen-Dien-Kautschuk (EPDM) und/oder Polyvinylchlorid (PVC) umfasst, vorzugsweise, dass die Schwerschicht (6) im Wesentlichen aus Ethylenvinylacetat (EVA), Ethylen-Propylen-Kautschuk (EPM), Ethylen-Propylen-Dien-Kautschuk (EPDM) und/oder Polyvinylchlorid (PVC) besteht.

13. Formteil (1) zur Schalldämmung einer Einbauvorrichtung (2), **dadurch gekennzeichnet, dass** das Formteil (1) gemäß einem Verfahren nach einem der Ansprüche 1 bis 12 hergestellt wurde.

14. Verfahren zur Schalldämmung einer Einbauvorrichtung (2), **dadurch gekennzeichnet, dass** ein im Wesentlichen ebenes Halbzeug (3) mit einer Polyurethanschaumschicht (8) und einer biegeelastischen Schwerschicht (6) durch einen Abtrennschritt zu einem Formteil (1) zur Schalldämmung konfektioniert wird, dass das Formteil (1) unter Verbiegung so angeordnet und befestigt wird, dass das Formteil (1) eine Mantelfläche der Einbauvorrichtung (2) umgreift und die Polyurethanschaumschicht (8) bezogen auf die Schwerschicht (6) innen zur Mantelfläche angeordnet ist.

15. Verfahren nach Anspruch 14, **dadurch gekennzeichnet, dass** das Formteil (1) eine Außenoberfläche (9a), eine Innenoberfläche (9b) und eine umlaufende Randfläche (14) aufweist, dass bei der die Mantelfläche umgreifenden Anordnung des Formteils (1) entlang einer Naht (11) die Randfläche (14) Stoß-an-Stoß aneinander angrenzt und dass nach Anordnung das Formteil (1) dadurch an der Einbauvorrichtung befestigt wird, dass eine Verschlussvorrichtung (12) über die Naht (11) angeordnet wird und an der Außenoberfläche (9a) befestigt wird.
